# EUROPÄISCHE PATENTANMELDUNG

(11) **EP 1 707 047 A1**
(43) Veröffentlichungstag der Anmeldung: **04.10.2006**
(21) Anmeldenummer: 06111838.6
(22) Anmeldetag: 28.03.2006
(51) Int. Cl.: A01F 15/07

(54) **Ladevorrichtung**

(30) Priorität: 02.04.2005 DE 102005015226
(71) Anmelder: Deere & Company, Moline, IL 61265-8098 (US)
(72) Erfinder: Viaud, Jean, 70100, Gray (FR); Chapon, Emmanuel, 70100, Velet (FR); Millerat, Vincent, 92130, Issy les Moulineaux (FR)
(74) Vertreter: Magin, Ludwig Bernhard

(57) **Zusammenfassung**

Es wird eine Ladevorrichtung (34) für die Hüllmittelrolle (32) einer Umhüllungsvorrichtung (18) vorgeschlagen, bei der die Hüllmittelrolle (32) auf einen Träger (38) aufgelegt und in einen Betriebszustand bewegt werden kann, wo sie mittels mehrerer Rollen (28, 54, 56) lagegesichert wird. Die Hüllmittelrolle (32) wird zum Aufsetzen auf eine antreibende Rolle (24) vorbereitet, sobald der Träger (38) aus seiner Ladestellung bewegt wird.

## Beschreibung

Die Erfindung betrifft eine Ladevorrichtung einer Umhüllungsvorrichtung, insbesondere einer Rundballenpresse, für eine Hüllmittelrolle.

Im Stand der Technik sind verschiedene Vorrichtungen bekannt, mit denen eine Hüllmittelrolle in die Umhüllungsvorrichtung z.B. einer Rundballenpresse eingesetzt werden kann. So zeigt z.B. die EP 1 099 366 A1 eine Ladevorrichtung, bei der eine Hüllmittelrolle auf einen Träger aufgelegt und mit diesem in eine Betriebsstellung gebracht werden kann.

Das der Erfindung zugrunde liegende Problem wird darin gesehen, dass es nach dem Einlegen der Hüllmittelrolle noch weiterer Handgriffe bedarf, bis die Umhüllungsvorrichtung betriebsbereit ist.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Dadurch, dass die Ladevorrichtung einen Träger zur Aufnahme der Hüllmittelrolle, der zwischen einer Ladestellung und einer Betriebsstellung bewegbar ist, eine Betätigungsvorrichtung, die geeignet ist, die Hüllmittelrolle auf dem Träger in eine Betriebsstellung zu bringen und Mittel enthält, die die Betätigungsvorrichtung abhängig von der Stellung des Trägers aktivieren, wird sie lediglich durch die Bewegung des Trägers betriebsbereit gemacht. Dieser Vorteil vereinfacht die Bedienung, stellt sicher, dass bei hochgeklapptem Träger die Ladevorrichtung betriebsbereit ist und spart Zeit. Die Beziehung zwischen dem Träger und der Betätigungsvorrichtung kann sowohl mechanisch als auch elektrisch oder hydraulisch hergestellt werden, unter anderem durch Schalter oder mechanische Folgeglieder.

Die motorische Verstellung des Trägers hat insbesondere dort einen großen Vorteil, wo der Träger ein hohes Gewicht aufweist und/oder schlecht zugänglich ist. Die motorische Verstellung kann zudem auf eine Steuervorichtung übertragen und an die Situation angepaßt werden.

Die Verwendung einer Querstrebe an dem Träger macht es möglich, die Hüllmittelrolle bei einer Bewegung des Trägers lagezusichern.

Während der Träger die Aufgabe hat, eine Hüllmittelrolle zu tragen, sie zu positionieren und später mit seiner Bewegung die Ladevorrichtung betriebsbereit zu machen, wird ein Zwischenträger vorgesehen, auf dem die Hüllmittelrolle ruht und mit dem diese in eine Stellung, vorzugsweise in Anlage an der Querstrebe, gebracht werden kann, die eine problemelose Verbringung in die Betriebsstellung zuläßt.

Die Verwendung einer Betätigungsvorrichtung für den Zwischenrahmen macht es möglich, die Hüllmittelrolle so auf dem Träger zu sichern, dass diese sogar überkopf gefördert werden kann. Wenn die Betätigungsvorrichtung als eine Feder, insbesondere als eine Gasdruckfeder ausgebildet ist, kann diese mittels einer von der Maschine, an der sich die Ladevorrichtung befindet, abgeleiteten Bewegung gespannt und bei Bedarf entspannt werden. Andererseits kann die Betätigungsvorrichtung auch als ein Motor ausgebildet sein, der in einer oder zwei Richtungen aktivierbar ist. Die Spannung erfolgt dadurch, dass der Träger in seine Ladestellung gebracht, d.h. insbesondere abgesenkt wird. Gleichermaßen wird die Betätigungsvorrichtung aktiviert bzw. freigesetzt, wenn der Träger zu seiner Betriebsstellung hin bewegt wird.

Um eine Umhüllungsvorrichtung in einen Betriebszustand zu versetzen, werden in sinnvoller Weise Rollen vorgesehen, die die Position der Hüllmittelrolle sichern und gegebenenfalls tragen.

Dabei kann die eine oder mehrere Rollen bremsbar oder antreibbar oder frei drehend ausgebildet sein. Dessen ungeachtet können aber auch elektrisch oder hydraulisch verstellbare Rollen vorgesehen werden, die sich der sich verändernden Größe der Hüllmittelrolle anpassen.

Eine Möglichkeit, die Ladevorrichtung in einen betriebsmäßigen Zustand zu bringen, besteht darin, dass die Mittel, die die Betätigungsvorrichtung abhängig von der Stellung des Trägers aktivieren, Anschläge enthalten, die einerseits mit dem Träger und der Betätigungsvorrichtung und andererseits mit einem festen Punkt an dem Fahrwerk oder den Seitenwänden der Rundballenpresse in Verbindung stehen; hierdurch entsteht eine Relativbewegung, die zur Steuerung der Ladevorrichtung benutzt werden kann.

Die Abziehspannung in dem Hüllmittel kann dadurch erhöht werden, daß Betätigungsvorrichtung mittels des Zwischenrahmens die Hüllmittelrolle an die antreibbare Rolle anlegt. Auf diese Weise erfüllt die Betätigungsvorrichtung zugleich zwei Aufgaben.

In der Zeichnung ist ein nachfolgend näher beschriebenes Ausführungsbeispiel der Erfindung dargestellt. Es zeigt:
- Fig. 1: eine Rundballenpresse mit einer Umhüllungsvorrichtung,
- Fig. 2: die Umhüllungsvorrichtung in einem Ladezustand,
- Fig. 3: die Umhüllungsvorrichtng mit einer Hüllmittelrolle in einem geladenen Zustand, und
- Fig. 4: die Umhüllungsvorrichtung mit der Hüllmittelrolle in betriebsmäßigem Zustand.

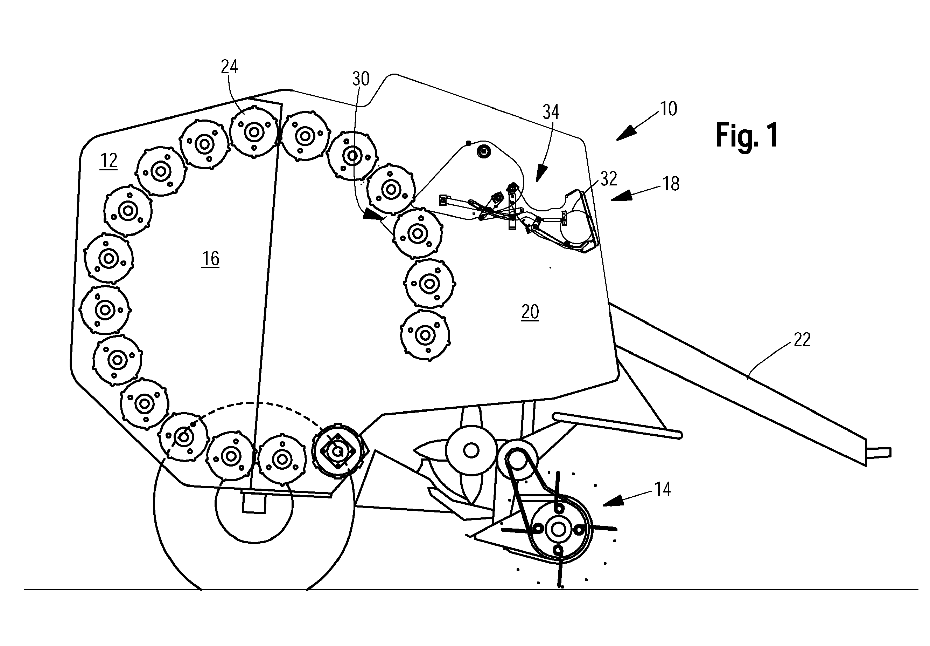

Eine in Figur 1 gezeigte Rundballenpresse 10 weist ein Fahrgestell 12, eine Erntegutzufuhrvorrichtung 14, eine Presskammer 16 und eine Umhüllungsvorrichtung 18 auf.

Die Rundballenpresse 10 steht hier stellvertretend für eine Presse, die ein Presserzeugnis liefert, das mit Hüllmittel umhüllt werden kann. Folglich kann es sich um eine landwirtschaftlich oder industriell einsetzbare Presse handeln, mit der Erntegut, Müll, Papier, Stoff, Baumwolle, Tabak, etc. insbesondere zu rundzylindrischen Ballen geformt werden kann. Die dargestellte Bauweise einer Festkammerpresse ist ebenfalls nur beispielhaft und kann durch eine Rundballenpresse 10 mit einer in der Größe variablen Presskammer 16 oder mit einer gemischten Bauweise ausgebildet sein. Grundsätzlich könnte die Umhüllungsvorrichtung 18 überall dort eingesetzt werden, wo es gilt, einen Gegenstand mit einem von einer Rolle abzuziehenden Hüllmittel zu bedecken, d.h. auch unabhängig von dem Vorhandensein einer Presse.

Das Fahrgestell 12 weist in nicht näher bezeichneter Weise einen Rahmen und eine Achse mit Rädern auf, an den Seitenwände 20 und eine Deichsel 22 angebracht sind, wie dies herkömmlich vorgenommen wird. Die Deichsel 22 erstreckt sich annähernd horizontal von dem vorderen Endbereich des Fahrgestells 12 zu einem nicht gezeigten Zugfahrzeug.

Die Erntegutzufuhrvorrichtung 14 steht stellvertretend für jegliche Vorrichtung, mit der zu pressendes Gut in die Presskammer 16 gespeist wird. Die Erntegutzufuhrvorrichtung 14 befindet sich unterhalb der Deichsel 22.

Die Presskammer 16 erstreckt sich zwischen den beiden Seitenwänden 20 und wird in diesem Fall von einer Vielzahl auf einem Kreis gelegener Walzen 24 umgeben, die allerdings im vorderen Bereich einen oberen Spalt für die Umhüllungsvorrichtung 18 und einen unteren Spalt für die Erntegutzufuhrvorrichtung 14 belassen.

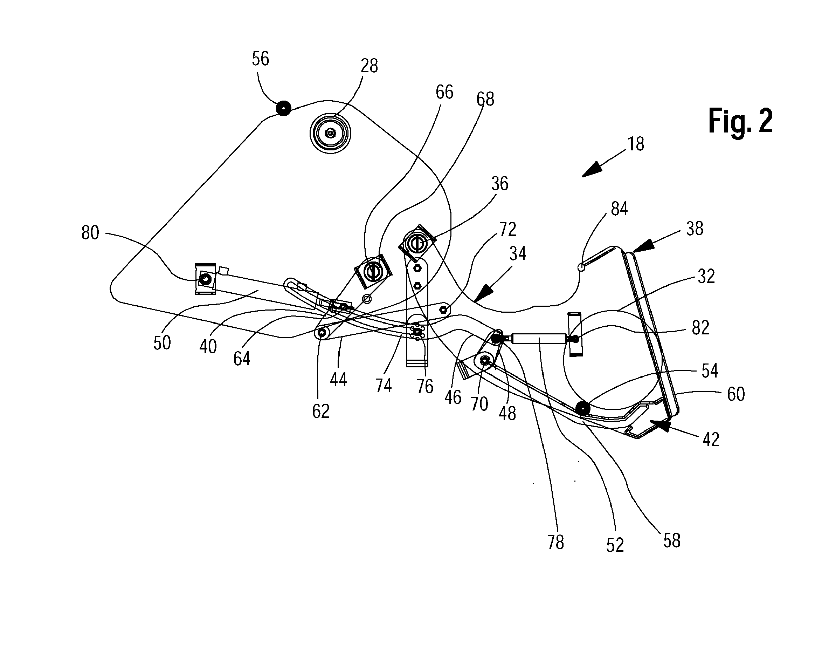

Die Umhüllungsvorrichtung 18 wird benutzt, um in die Presskammer 16 Hüllmittel 26 in der Form von Folie, Netz, Papier oder dergleichen einzuführen und um ein Presserzeugnis zu wickeln. Derartige Umhüllungsvorrichtungen 18 sind ihrer Art nach bekannt und können an fast beliebigen Stellen der Rundballenpresse 10 angeordnet werden; vorteilhafterweise ist ihre Unterbringung so gewählt, dass eine Bedienungsperson leicht Zugang zu ihr hat. In dem vorliegenden Fall befindet sich die Umhüllungsvorrichtung 18 im vorderen Bereich des Fahrgestells 12 oberhalb der Deichsel 22 und ist so ausgebildet, dass sie das Hüllmittel 26 durch einen Spalt - den oberen - zwischen zwei Walzen 24 in die Presskammer 16 abgibt. Im Bereich des Spalts befindet sich eine Rolle 28 zur Zufuhr von Hüllmittel 26 und eine Trennvorrichtung 30, um dieses zu trennen, wie dies hinlänglich bekannt ist. Das Hüllmittel 26 ist auf einer Hüllmittelrolle 32 aufgewickelt. Der Umhüllungsvorrichtung 18 ist auch eine Ladevorrichtung 34 zugeordnet, zu deren Beschreibung auf die Figuren 2 bis 4 verwiesen wird.

Figur 2 zeigt die Umhüllungsvorrichtung 18 und deren Ladevorrichtung 34 in einem Ladezustand, wobei in der Darstellung insbesondere folgende Komponenten zu erkennen sind: ein Lager 36, ein Träger 38, ein Arm 40, ein Zwischenrahmen 42, ein erster Lenker 44, ein zweiter Lenker 46, ein Hebelarm 48, eine erste Betätigungsvorrichtung 50, eine zweite Betätigungsvorrichtung 52, eine bewegliche Stützrolle 54 und eine stationäre Stützrolle 56.

Die Ladevorrichtung 34 ist so geschaffen und angeordnet, dass eine Hüllmittelrolle 32 relativ bequem von einer Bedienungsperson auf den Träger 38 bzw. dessen Zwischenrahmen 42 aufgelegt und insbesondere mittels oder unterstützt von der der ersten und gegebenenfalls der zweiten Betätigungsvorrichtung 50, 52 in eine Betriebsstellung gebracht werden kann.

Das Lager 36 wird von einer durchgehenden Welle, Zapfen oder dergleichen gebildet, die eine sich quer zur Fahrtrichtung erstreckende, waagrechte Schwenk- oder Drehachse definieren, die parallel zu, vor und unterhalb der Drehachse der Rolle 28 verläuft.

Der Träger 38 kann aus Stahl oder Kunststoff hergestellt sein und ist ausreichend stark, um die Hüllmittelrolle 32 tragen zu können; üblicherweise ist er als ein Schweißzusammenbau gebildet, der sich im Wesentlichen zwischen den beiden Seitenwänden 20 erstreckt und um das Lager 36 vertikal schwenkbar ist. Der Träger 38 untergliedert sich in einen langen und leicht gekrümmten Tragschenkel 58 und eine Vorderseite 60, die zusammen einstückig ausgebildet sind und im Wesentlichen unter einem rechten Winkel zueinander verlaufen. Die Länge des Tragschenkels 58 und der Vorderseite 60 sind jeweils so gewählt, dass die Hüllmittelrolle 32 sowohl in der Lade- als auch in der Betriebsstellung von dem Träger 38 erfasst bzw. gehalten werden kann. In der Ladestellung ist der Tragschenkel 58 zu der Vorderseite 58 hin geneigt, so dass eine aufgelegte Hüllmittelrolle 32 nicht unbeabsichtigt in Figur 2 nach rechts rollen kann. Der Tragschenkel 58 ist mit seinem freien, d.h. der Vorderseite 60 abgelegenen Endbereich schwenkbar auf dem Lager 36 gehalten.

Der Arm 40 hat eine gerade Form und weist im unteren Endbereich ein unteres Lager 62, ein mittleres Lager 64 und ein oberes Lager 66 auf. Der Arm 40 ist als ein flaches Bauelement z.B. aus Flachstahl gebildet und jeweils an der Innen- oder Außenseite einer Seitenwand 20 vorgesehen. Jeder Arm 40 ist mit seinem oberen Lager 66 auf einem Lager 68 vertikal schwenkbar aufgenommen. Das mittlere Lager 64 dient dem Anschluß des in der Zeichnung rechten Endbereichs der Betätigungsvorrichtung 50, und das untere Lager 62 dem Anschluß des ersten Lenkers 44. Alle Lager 62, 64, 66 liegen auf einer Linie und sind relativ einfach ausgebildet, z.B. mit Zapfen oder Schrauben in einer Bohrung.

Der Zwischenrahmen 42 ist als eine geknickte Platte oder dergleichen ausgebildet, die abschnittsweise auf dem Träger 38 aufliegt, auf einem Lager 70 gehalten und um dieses schwenkbar ist. Der Zwischenrahmen 42 ist in seinem der Vorderseite 60 zugelegenen Endbereich leicht nach oben gebogen, um eine Wanne zu bilden, in der die Hüllmittelrolle 32 gelagert werden kann. Der Zwischenrahmen 42 ermöglicht es, die Hüllmittelrolle 32 anzuheben und auf dem Träger 38 in eine Betriebsstellung zu bringen, in der sie bleibt, bis der Träger 38 in seine Betriebsstellung geschwenkt ist.

Der erste Lenker 44 ist als ein einfaches Flacheisen ausgebildet, das einenends an dem unteren Lager 62 des Arms 40 und anderenends in einem Lager 72 in einem Endbereich des Tragschenkels 58 des Trägers 38 nahe des Lagers 36 gelenkig angreift. Auch hier ist ein Lenker 44 auf jeder Seite vorgesehen.

Der zweite Lenker 46 ist in der Form eines schlanken "S" gehalten und weist über etwas mehr als der Hälfte seiner Länge einen Schlitz 74 auf. An der Seitenwand 20 oder dem Fahrgestell 12 ist ein Anschlag 76 vorgesehen, der aus einem einfachen Zapfen, einer Schraube oder dergleichen gebildet sein kann.

Einerseits wird der zweite Lenker 46 auf dem Anschlag 76 geführt und andererseits ist er mittels eines Lagers 78 vertikal schwenkbar mit dem Hebelarm 48 verbunden.

Der Hebelarm 48 verläuft im Wesentlichen unter einem rechten Winkel zu dem Zwischenrahmen 42 und ist mit diesem starr verbunden. Der Hebelarm 48 schließt in dem Bereich des Lagers 70 an den Zwischenrahmen 42 an und ist mit diesem gegenüber dem Träger 38 schwenkbar. In dem dem Lager 70 abgelegenen Endbereich des Hebelarms 48 greift in dem Lager 78 die weitere Betätigungsvorrichtung 52 schwenkbar an. Der Hebelarm 48 ist im Vergleich zu dem Zwischenrahmen 42 sehr kurz ausgebildet, so dass eine erhebliche Übersetzung der Bewegung des Zwischenrahmens 42 eintritt.

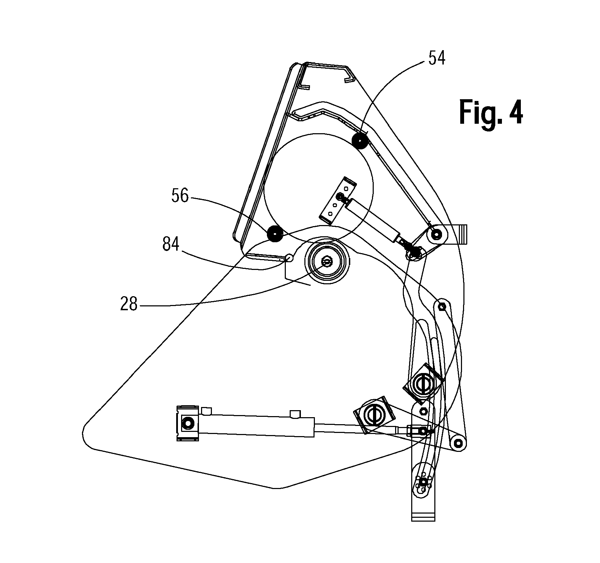

Die Betätigungsvorrichtung 50 ist in diesem Ausführungsbeispiel als ein Hydraulikmotor ausgebildet; alternativ könnte auch eine mechanische Feder, z. B. eine Schraubendruckfeder, oder eine Gasdruckfeder vorgesehen sein. Anstatt des Hydraulikmotors könnte auch ein Elektromotor verwendet werden. Die Betätigungsvorrichtung 50 ist mit einem in der Zeichnung linken, d.h. der Preßkamer 16 zugelegenen Endbereich in einem Lager 80 an dem Fahrgestell 12 oder einer Seitenwand 20 und mit dem rechten Endbereich in dem mittleren Lager 64 des Arms 40 gehalten; in jedem Betriebszustand erstreckt er sich nahezu waagrecht, wobei sich das mittlere Lager 64 stets unterhalb des oberen Lagers 66 befindet. Die Anordnung der Betätigungsvorrichtung 50 ist so gewählt, dass sie den Träger 38 stets aus der in Figur 2 gezeigten Lage nach oben zu der in Figur 4 gezeigten Lage drängt und vorzugsweise auch aus dieser heraus bewegt.

Die andere Betätigungsvorrichtung 52 ist in diesem Ausführungsbeispiel als eine Gasdruckfeder ausgebildet; alternativ könnte auch eine mechanische Feder, z.B. eine Schraubendruckfeder vorgesehen sein, oder gar ein Motor, z.B. ein Hydraulik- oder Elektromotor. Die weitere Betätigungsvorrichtung 52 ist mit einem Endbereich in dem Lager 78 und mit dem anderen Endbereich in einem Lager 82 an dem Träger 38 gehalten. Die Anordnung der Betätigungsvorrichtung 52 ist so gewählt, dass sie den Zwischenrahmen 42 gegenbenenfalls mit der Hüllmittelrolle 32 aus der in Figur 2 gezeigten Lage nach oben zu einer Querstrebe 84 an der oberen Seite der Vorderseite 60 drängt, sobald dies möglich ist.

Die bewegliche und auf dem Zwischenrahmen 42 angeordnete Stützrolle 54 ist in der Art eines Rohrs aus Stahl oder Kunststoff gebildet und verläuft koaxial zu der Achse des Lagers 36. Die Stützrolle 54 ist drehbar in dem Zwischenrahmen 42 gehalten und geeignet, gemeinsam mit der Rolle 28 und der stationären Stützrolle 56 die Hüllmittelrolle 32 in ihrer Betriebslage zu fixieren, d. h. die Betätigungsvorrichtung 52 bringt die Umhüllungsvorrichtung 18 in einen Zustand, in dem Hüllmittel 26 von der Hüllmittelrolle 32 abgezogen werden kann. Die Stützrolle 54 kann angetrieben, gebremst oder frei drehend ausgebildet sein.

Die stationäre Stützrolle 56 befindet sich ungefähr auf der Höhe der Rolle 28 und befindet sich zwischen dieser und der Presskamer 16 in einem Abstand zu der Rolle 28, der kleiner ist als der minimalste Durchmesser der Hüllmittelrolle 32. Auch diese Stützrolle 56 kann frei drehend, gebremst oder angetrieben sein.

Aus dem vorstehend Beschriebenen ergibt sich bei einer Ladesituation gemäß Figur 2 folgender Aufbau. Die erste Betätigungsvorrichtung 50 ist nicht beaufschlagt und nimmt ihre kürzeste Länge ein. Auf dem Weg des Trägers 38 in seine abgesenkte Stellung, legt sich der dem Lager 78 zugelegene Endbereich des Schlitzes 74 des zweiten Lenkers 46 an den Anschlag 76 an, was bewirkt, dass aufgrund des Gewichts des Trägers 38 und gegebenenfalls der aktiven Bewegung der Betätigungsvorrichtung 50 nunmehr auch der Zwischenrahmen 42 um das Lager 70 in seine auf den Träger 38 aufliegende Stellung bewegt wird. Da während dieser Bewegung der Hebelarm 48 ebenfalls im Uhrzeigerdrehsinn um das Lager 70 schwenkt, wird dabei die zweite Betätigungsvorrichtung 52 gespannt, d.h. zusammengedrückt. Die Ladevorrichtung 34 nimmt ihre in Figur 2 gezeigte Stellung ein, sobald der Zwischenrahmen 42 auf dem Träger 38 aufliegt. In dieser Stellung ergibt sich die größte Entfernung zwischen dem Zwischenrahmen 42 und der Querstrebe 84, die zudem geeignet ist, die Hüllmittelrolle 32 aufzunehmen.

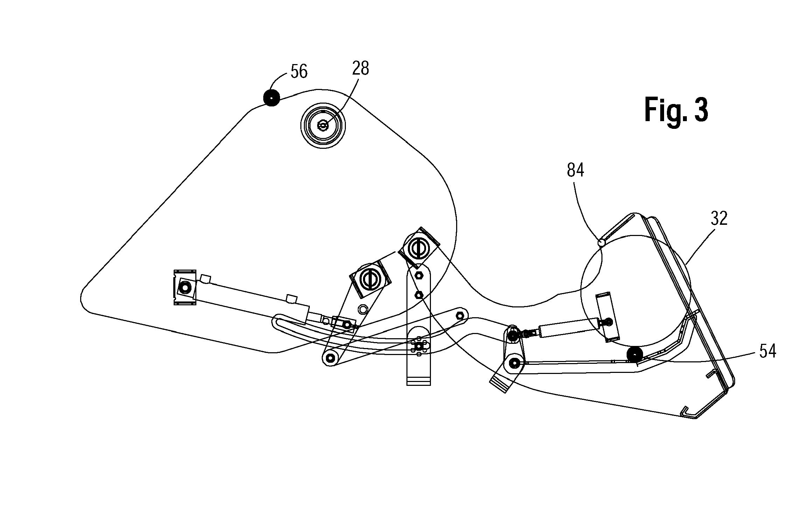

Wenn sich die Ladevorrichtung 34 in der in Figur 2 dargestellten Lage befindet, kann eine Hüllmittelrolle 32 eingelegt, d.h. von der Vorderseite 60 aus auf den Zwischenrahmen 42 aufgesetzt werden. Anschließend wird ein Teil des Hüllmittels 26 von der Hüllmittelrolle 32 abgezogen und über die Rolle 28 bis zu der Trennvorrichtung 30 gelegt. Nunmehr wird die erste Betätigungsvorrichtung 50 ausgefahren, so dass sich der Träger 38 entgegengesetzt zu dem Uhrzeigerdrehsinn um das Lager 36 bewegt und dabei auch den zweiten Lenker 46 mitschwenkt. Da sich nunmehr der Abstand zwischen dem Lager 78 und dem ortsfesten Anschlag 76 vergrößert, kann die zweite Betätigungsvorrichtung 52 ausfahren und hält das Ende des Schlitzes 74 an dem Anschlag 76. Dies bedeutet jedoch, dass der Hebelarm 48 und mit ihm der Zwischenrahmen 42 um das Lager 70 entgegen dem Uhrzeigerdrehsinn schwenken, so dass der Zwischenrahmen 42 bei anhaltender aufwärts gerichteter Schwenkbewegung des Trägers 38 von der Ebene des Trägers 38 zu der Querstrebe 84 hin bewegt und die Hüllmittelrolle 32 schließlich an dieser zur Anlage gebracht wird - sh. Figur 3 - in der sie zu der Rolle 28 für den Betrieb bewegt werden kann.

In Figur 3 ist zu erkennen, dass sich eine Linie durch die Mittelpunkte der beweglichen Rolle 54 und der Questrebe 84 die der Vorderseite 60 abgelegene Hälfte der Hüllmittelrolle 32 schneidet, so dass diese bei der fortdauernden Hebebewegung des Trägers 38 gesichert ist und nicht herausfallen kann. Die erste Betätigungsvorrichtung 50 wird weiter ausgefahren bis die Hüllmittelrolle 32 auf der Rolle 28 und der stationären Stützrolle 56 aufsitzt. In dieser in Figur 4 dargestellten Stellung wird die Hüllmittelrolle 32 zwischen der Rolle 28, der beweglichen Stützrolle 54 und der stationären Stützrolle 56 lagegesichert. Bei einer fortwährenden Bewegung der Betätigungsvorrichtung 50 wird der Träger 38 weiter um das Lager 36 geschwenkt, und da die Hüllmittelrolle 32 bereits auf der Rolle 28 und der stationären Stützrolle 56 aufsitzt, wird sich der Zwischenrahmen 42 gegenüber dem Träger 38 bewegen und dabei die weitere Betätigungsvorrichtung 52 spannen, wobei der Anpressdruck der Hüllmittelrolle 32 und somit der Widerstand beim Abziehen des Hüllmittels 26 steigt.

Wenn die Hüllmittelrolle 32 aufgebraucht ist und durch eine neue ersetzt werden soll, wird die erste Betätigungsvorrichtung 50 eingefahren und die oben beschriebenen Vorgänge laufen in umgekehrter Reihenfolge ab.

Während sich die vorgehende Beschreibung jeweils auf eine Betätigungsvorrichtung 50 bzw. 52 bezieht, wird hier klargestellt, daß über die Breite verteilt auch mehrere vorgesehen werden können.

## Patentansprüche

1. Ladevorrichtung (34) einer Umhüllungsvorrichtung (18), insbesondere einer Rundballenpresse (10), für eine Hüllmittelrolle (32) mit:
a) einem Träger (38) zur Aufnahme der Hüllmittelrolle (32), der zwischen einer Ladestellung und einer Betriebsstellung bewegbar ist,
b) einer Betätigungsvorrichtung (52), die geeignet ist, die Hüllmittelrolle (32) auf dem Träger (38) in eine Betriebsstellung zu bringen,
c) Mitteln, die die Betätigungsvorrichtung (52) abhängig von der Stellung des Trägers (38) aktivieren.

2. Ladevorrichtung nach Anspruch 1, **dadurch gekennzeichnet, dass** der Träger (38) mittels einer Betätigungsvorrichtung (50) motorisch bewegt werden kann.

3. Ladevorrichtung nach Anspruch 1 oder 2, **dadurch gekennzeichnet, dass** der Träger (38) eine Querstrebe (84) aufweist, an der die Hüllmittelrolle (32) zur Anlage bringbar ist.

4. Ladevorrichtung nach einem oder mehreren der vorherigen Ansprüche, **dadurch gekennzeichnet, dass** der Träger (38) einen Zwischenrahmen (42) aufweist, der manuell oder motorisch bewegbar ist.

5. Ladevorrichtung nach einem oder mehreren der vorherigen Ansprüche, **dadurch gekennzeichnet, dass** die Betätigungsvorrichtung (52) zwischen dem Zwischenrahmen (42) und dem Träger (38) vorgesehen und vorzugsweise als eine Feder, insbesondere als eine Gasdruckfeder ausgebildet ist.

6. Ladevorrichtung nach einem oder mehreren der vorherigen Ansprüche, **dadurch gekennzeichnet, dass** die Umhüllungsvorrichtung (18) eine stationäre Stützrolle (56) und eine antreibbare Rolle (28) aufweist, auf die die Hüllmittelrolle (32) in einem Betriebszustand aufsetzbar ist.

7. Ladevorrichtung nach einem oder mehreren der vorherigen Ansprüche, **dadurch gekennzeichnet, dass** die Mittel, die die Betätigungsvorrichtung (52) abhängig von der Stellung des Trägers (38) aktivieren, einen Anschlag (76) und einen Schlitz (74) in einem Lenker (46) enthalten, die einerseits mit dem Träger (38) und der Betätigungsvorrichtung (52) und andererseits mit einem Fahrwerk (12) und/oder Seitenwänden (20) in Verbindung stehen.

8. Ladevorrichtung nach einem oder mehreren der vorherigen Ansprüche, **dadurch gekennzeichnet, daß** die Betätigungsvorrichtung (52) mittels des Zwischenrahmens (42) die Hüllmittelrolle (32) an die antreibbare Rolle (28) anlegt.
